# EUROPEAN PATENT APPLICATION

(11) **EP 0 631 116 A1**
(43) Date of publication of application: **28.12.1994**
(21) Application number: 94304240.8
(22) Date of filing: 13.06.1994
(51) Int. Cl.: G01G 19/08

(54) **Apparatus for measuring deflection of axles**

(30) Priority: 21.06.1993 ZA 934459
(71) Applicant: De Beer, Peter, Pinetown 3610, Natal (ZA)
(72) Inventor: De Beer, Peter, Pinetown 3610, Natal (ZA)
(74) Representative: Spence, Anne

(57) **Abstract**

An apparatus for measuring the deflection of the hollow axle beam of a vehicle in response to the loading of the vehicle comprises an elongated element located longitudinally with the beam and anchored at either end. The element is adapted to detect displacement of the element relative to the beam.

## Description

### FIELD OF THE INVENTION

This invention relates to apparatus for the measurement or indication of deflection of axles, in particular to trailer axle beams which are hollow.

### BACKGROUND OF THE INVENTION

The loading of trailers as to mass distribution and total mass is not only a question of optimum use of the trailer but may also be specified by legislation.

It is an object of the present invention to provide apparatus which gives an exact measurement of deflection of an axle, thereby giving an indication or direct measurement of the load and/or of its distribution.

A European search report dated 23 August 1993 cited two patents:
U S 3 780 817 (Videon) relates to a load indicating apparatus for measuring the deflection of an axle which has a bar slung between two vertical supports which move towards each other when the axle flexes. A transducer is connected to the upper ends of the supports to measure the distance therebetween to give an indication of the load on the axle.

PCT WO 90/13799 uses a string attached to spindles of an axle and meams are provided to measure the frequency of vibration which is related to the tension in the string. This gives a measure of the load on the axle.

The present invention differs substantially from either of these two references in that the cable or rod remains straight (unlike U S 3 780 817) and frequency is not measured but rather the degree of bend of the axle.

### THE INVENTION

According to the invention apparatus for measuring or indicating the deflection of a hollow axle beam in response to the loading of the vehicle includes an elongated element located longitudinally within the beam and anchored at either end thereof; and means associated with the element adapted to sense displacement of the element with respect to the beam, thereby indicating deflection of the beam.

In a preferred form of the invention the elongated element is a cable or a rod which is clamped under tension at either end of the beam.

The sensor may take any one of many forms and, in particular, a transducer arrangement.

### EMBODIMENT OF THE INVENTION

An embodiment of the invention will be described with reference to the accompanying drawings in which:
Figure 1 is a sectional side view of an axle beam incorporating the invention;
   and
Figure 2 is a similar view showing displacement of the elongated element in exaggerated condition.

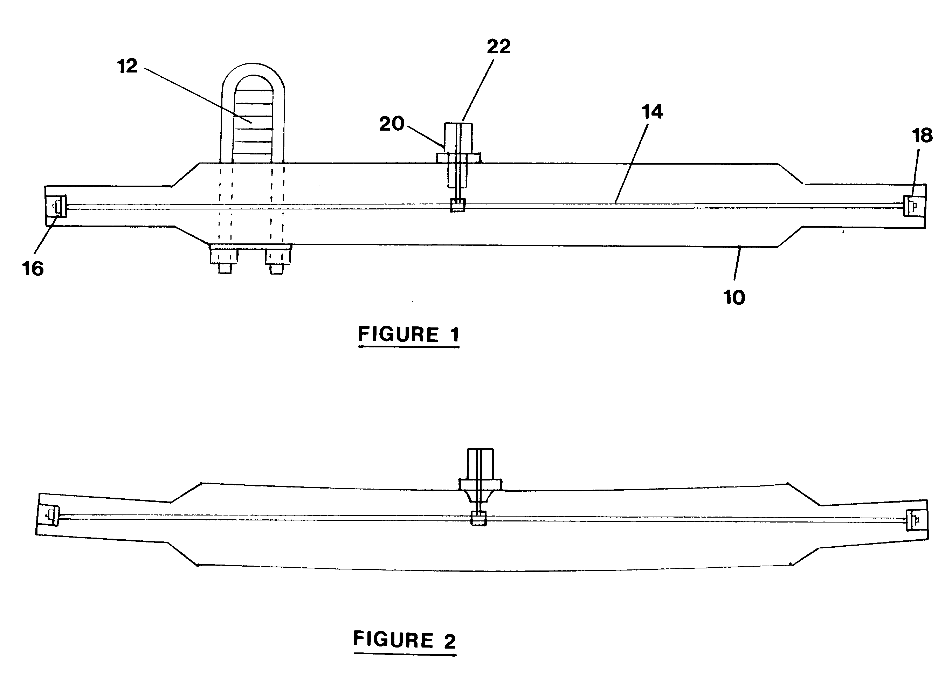

In the drawings an axle beam 10 is supported by springs 12 in the normal manner, only one spring being shown, and the wheels are omitted. A cable 14 is anchored at either end 16,18 of the beam under tension so that it assumes the position shown in Figure 1. A transducer 20 acts as a sensor for any displacement of the cable. Such a displacement is illustrated in Figure 2 in exaggerated form.

The sensor may be connected to a warning device such as alarm, indicator light or the like in the driving cab of the vehicle to indicate when an predetermined load is present, or it may give a direct or indirect exact measurement of the mass of the load. The sensor may include a gauge 22 for observation while loading.

## Claims

1. Apparatus for measuring or indicating the deflection of a hollow axle beam in response to the loading of the vehicle including an elongated element located longitudinally within the beam and anchored at either end thereof; and adapted to sense displacement of the element with respect to the beam, thereby indicating deflection of the beam.

2. Apparatus according to Claim 1 in which the elongated element is a cable or a rod which is clamped under tension at either end of the beam.

3. Apparatus according to Claim 1 or Claim 2 in which the means adapted to sense displacement of the element is a transducer arrangement.

4. Apparatus for measuring and indicating the deflection of a hollow axle beam (10) in a vehicle, comprising sensor means including an elongate element (14) for measuring the load on the beam, characterised in that the elongate element (14) is located longitudinally within the beam and anchored at either end (14, 18) thereof, and the sensor means (20) is adapted to sense the relative lateral displacement of the element and beam when the beam is under load and to provide an indication of the deflection of the beam and/or the load on the beam.
